# EUROPEAN PATENT APPLICATION

(11) **EP 4 544 900 A1**
(43) Date of publication of application: **30.04.2025**
(21) Application number: 24206828.6
(22) Date of filing: 16.10.2024
(51) Int. Cl.: A01D 43/08, A01D 43/10, G01N 21/85

(54) **HARVESTING MACHINE MONITORING**

(30) Priority: 23.10.2023 GB 202316190
(71) Applicant: AGCO International GmbH, 8212 Neuhausen am Rheinfall (CH)
(72) Inventor: HERMANN, Dan, DK-8930 Randers NØ (DK); Groetsch, Johannes, 87616 Marktoberdorf (DE); Duering Jensen, Kenneth, DK-8930 Randers (DK)
(74) Representative: AGCO Intellectual Property Department

(57) **Abstract**

Systems and methods are provided for monitoring operation of an agricultural harvesting machine, such as a forage harvester. A first sensor, operably coupled, in use, to the harvesting machine, obtains first sensor data which is indicative of a crop content measure. A second sensor, operably coupled, in use, to the harvesting machine, obtains second sensor data which is indicative of a crop size measure. A crop processing metric is calculated in dependence on the first and second sensor data and used to control operation of one or more operable components of or otherwise associated with the agricultural harvesting machine, e.g. to adjust a level of processing applied by the harvesting machine.

## Description

### CROSS-REFERENCE TO RELATED APPLICATIONS

Not applicable.

### FIELD

Embodiments of the present disclosure relate generally to systems and methods for monitoring operation of an agricultural harvesting machine, such as a forage harvester.

### BACKGROUND

A crop silage processing score (CSPS) test is a laboratory solution utilised to monitor or track "usable" (e.g. digestible) starch content in a crop sample. Typically this may involve sieving a crop sample through a predefined grid to filter based on crop component (e.g. kernel) size. A total starch content measure is obtained for the crop sample prior to sieving. Following this, material passing through the screen is again analysed for its starch content, and a comparison of the starch content before and after sieving provides a measure in the form of the CSPS. It is utilised as a measure of an expected performance for crop material stored in a silo. However, as the analysis is done at a later time compared with the harvesting of the material from the field to data the CSPS has had no practical use in optimizing or at least improving operation of a harvesting machine in real time, i.e. as the harvesting operation is taking place.

It is therefore an aim of embodiments of the disclosure to overcome or at least partly mitigate the fallbacks of the known solutions.

### BRIEF SUMMARY

In an aspect of the invention there is provided a control system for controlling operation of an agricultural harvesting machine, the control system comprising one or more controllers, and being configured to: receive first sensor data from a first sensor operably coupled, in use, to the harvesting machine, the first sensor data being indicative of a crop content measure; receive second sensor data from a second sensor operably coupled, in use, to the harvesting machine, the second sensor data being indicative of a crop size measure; compute a crop processing metric in dependence on the first and second sensor data; and generate and output one or more control signals for controlling operation of one or more operable components of or otherwise associated with the agricultural harvesting machine in dependence on the processing metric.

Advantageously, the present disclosure provides a real-time monitoring solution for an agricultural harvesting machine which utilises both a crop content measure and a crop size measure to determine or compute a metric indicative of a processing level or quality. This can be used in real time for controlling operable components of the agricultural harvesting machine, including for example processor settings of the machine to optimize or at least improve a level of processing applied by the machine to the crop, thereby improving output for the harvesting operation. It may also be possible, in some harvesting circumstances, to utilise the crop processing metric to balance the level of processing with fuel consumption, throughput and/or wear and tear of the operable components of the harvesting machine, e.g. where the crop material harvested by the machine requires a lower level of processing to achieve comparable crop processing metric, for instance due to the nature of the crop material.

The one or more controllers may collectively comprise an input (e.g. an electronic input) for receiving one or more input signals. The one or more input signals may comprise the first and/or second sensor data. The one or more controllers may collectively comprise one or more processors (e.g. electronic processors) operable to execute computer readable instructions for controlling operational of the control system, for example, to compute the crop processing metric. The one or more processors may be operable to generate one or more control signals for controlling operation of the one or more operable components. The one or more controllers may collectively comprise an output (e.g. an electronic output) for outputting the one or more control signals.

The crop processing metric may comprise a processing score for the crop material. This may be indicative of a level of processing applied to the crop material by the harvesting machine, or specifically by one or more components of a crop processing apparatus of the harvesting machine. The crop processing metric may relate to a level of processing to be applied by the harvesting machine. For instance, the computed crop processing metric incorporates information indicative a crop size or crop component size, which may relate directly to a digestibility of the crop material, for example, by livestock. Accordingly, where larger crop components are identified the crop processing metric may be indicative of a need to change (e.g. increase) a level of processing to be applied to the crop material.

The first sensor may comprise an optical sensor. The first sensor may comprise a spectroscopic sensor. The first sensor may comprise an infrared sensor, such as a near infrared sensor, for example. The first sensor may be operable to monitor a spectroscopic response to measurement signals transmitted by a transmitting element of the sensor.

The first sensor may be configured to be coupled, in use, to the harvesting machine at or proximal to a crop flow associated with the harvesting machine. Where the harvesting machine comprises a forage harvester, the first sensor may be configured to be coupled, in use, with a sensing region which encompasses a crop flow in a discharge spout of the forage harvester.

The crop content measure may comprise a measure of one or more properties of the crop material. This may include a dry matter content, fiber, protein, fat, ash content and/or sugar content. In embodiments, the crop content measure may comprise a measure of a starch content of the crop material.

The second sensor may comprise an optical sensor. The second sensor may comprise a camera. The one or more controllers may be configured to receive and analyse image data from the second sensor for identifying crop material components within the image data. This may include the one or more controllers being configured to perform an object recognition process on image data received from the second sensor for identifying individual crop material components within the image data, and optionally identifying one or more properties thereof. The one or more properties may include a measure of one or more dimensions of the identified crop material components. The crop size measure may relate to a length, width, shape, surface area or estimate of a volume of the identified crop material components, for example.

The second sensor may be configured to be coupled, in use, to the harvesting machine at or proximal to a crop flow associated with the harvesting machine. Where the harvesting machine comprises a forage harvester, the second sensor may be configured to be coupled, in use, with a sensing region which encompasses a crop flow in a discharge spout of the forage harvester.

The one or more controllers may be configured to compute the crop processing metric through application of an adjustment to a crop content measure as determined from the first sensor data in dependence on a crop size measure as determined from the second sensor data. For example, the one or more controllers may be configured to determine a crop size distribution for crop material identified within the second sensor data. This may include comparison of the determined crop size measures with a threshold size parameter, e.g. a threshold length, width, diameter, etc. This comparison may provide a proportion of identified crop material components having a size measure which is at or smaller than the threshold size parameter. The one or more controllers may be configured to apply the determined proportion to the crop content measure, as determined from the first sensor data to compute the crop processing metric. Advantageously, comparing identified crop material component sizes with a threshold may allow for the computation of a processing metric which is indicative of a usability (e.g. digestibility) or future processing for the crop material, specifically here relating to a crop silage processing score where the crop material is to be stored in a silage stack and utilised as livestock feed.

The threshold size parameter may be predetermined. The threshold size parameter may be adjustable, e.g. by an operator of the agricultural harvesting machine. The threshold size parameter may be approximately 4.75mm, and may relate to a diameter, radius, length or width of crop material components, for example.

Where the crop content measure comprises a measure of the total starch content of the crop material, the one or more controllers may be configured to apply an appropriate adjustment based on the determined size proportion to determine a crop processing metric which is indicative of a starch content of crop material having a size measure which is at or below the predetermined threshold size parameter. This may advantageously relate to a crop silage processing score, as will be appreciated.

The one or more operable components may include one or more components of or otherwise associated with a crop processing apparatus (or "processor") of the agricultural harvesting machine. The one or more controllers may be configured to control one or more operational parameters of the crop processing apparatus to adjust a level of processing applied thereby to crop material passing through the crop processing apparatus.

The one or more controllers may be configured to adjust one or more operational parameters of the crop processing apparatus to increase a level of processing applied to the crop material by the crop processing apparatus in dependence on the crop processing metric being at or below a crop processing metric threshold. The one or more controllers may be configured to adjust one or more operational parameters of the crop processing apparatus to decrease a level of processing applied to the crop material by the crop processing apparatus in dependence on the crop processing metric exceeding a crop processing metric threshold. The crop processing metric threshold may be predefined, or may be user adjustable, e.g. by an operator of the agricultural harvesting machine.

The one or more operable components may include a processor roller or rollers. The one or more controllers may be configured to adjust a roller gap and/or roller speed associated with the processor roller(s) in dependence on the determined crop processing metric. This may advantageously increase or decrease a level of processing applied to gathered crop by the agricultural harvesting machine by adjusting a level of mechanical force applied by the roller(s) as the crop material passes through the crop processing apparatus of the machine.

The one or more operable components may include a cutting apparatus. The one or more controllers may be configured to adjust one or more operable parameters of the cutting apparatus, which may include an operational speed or position of one or more cutting members of the cutting apparatus. The one or more controllers may be configured to adjust a length of cut applied to gathered crop material in dependence on the crop processing metric.

The one or more operable components may include a guidance system for the harvesting machine. The guidance system may be operable to control a direction of travel and/or forward (or backward) speed of the agricultural harvesting machine. The one or more controllers may be configured to control a forward speed of the agricultural harvesting machine in dependence on the crop processing metric. Advantageously, adjusting the forward speed of the machine may in turn control a feed speed of crop material into a crop processing apparatus or other working components of the harvesting machine, thereby adjusting a level of processing applied by such components.

The one or more operable components may include a header or other intake for the harvesting machine. The one or more controllers may be configured to control operation of the header or one or more components thereof in dependence on the crop processing metric, e.g. to control a feed rate, profile or the like of crop material into the agricultural harvesting machine. This may include controlling operation of one or more feed elements, cutting elements, transfer elements or the like.

The one or more operable components may include an accelerator assembly for the agricultural harvesting machine. The accelerator assembly may be configured for applying a propulsive force to collected crop material for distribution by an unloading spout of the harvester, for example. The one or more controllers may be configured to adjust an operational speed of the accelerator assembly in dependence on the crop processing metric.

The one or more operable components may include a user interface. The user interface may, for example, comprise a display terminal of the agricultural machine. The user interface may comprise a user device, such as a smartphone or tablet computer, for example. The one or more controllers may be configured to control operation of the user interface, e.g. by controlling display of a graphical representation thereon indicative of the computed crop processing metric. In an at least partly automated system, the graphical representation may be provided for information purposes to inform an operator of the machine of automated adjustments made, for example, to crop processing apparatus of the agricultural machine in dependence on the computed crop processing metric. In other embodiments the one or more controllers may be configured to provide one or more instructions or suggested adjustments to operational setting(s) associated with the harvesting machine and/or components thereof. This may include suggested adjustments to a forward speed of the machine, a processing intensity associated with the crop processing apparatus of the machine, or the like, for example.

In another aspect, there is provided a crop processing system for an agricultural harvesting machine, the crop processing system comprising a control system as described herein; and first and second sensors operably coupled, in use, to the agricultural harvesting machine for obtaining first and second sensor data.

A further aspect provides an agricultural harvesting machine comprising the control system and/or system according to any preceding aspect described herein. The agricultural harvesting machine may optionally comprise a forage harvester.

A further aspect provides a method of monitoring operation of an agricultural harvesting machine; the method comprising: receiving first sensor data from a first sensor operably coupled, in use, to the harvesting machine, the first sensor data being indicative of a crop content measure; receiving second sensor data from a second sensor operably coupled, in use, to the harvesting machine, the second sensor data being indicative of a crop size measure; computing a crop processing metric in dependence on the first and second sensor data; and controlling operation of one or more operable components of or otherwise associated with the agricultural harvesting machine in dependence on the processing metric.

The method may comprise performing any one or more of the functionalities of the control system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating an agricultural harvesting machine embodying aspects of the present disclosure;
FIG. 2 is an image illustrating the operational use of aspects of the present disclosure; and
FIG. 3 is a schematic diagram of a control system of the present disclosure.

### DETAILED DESCRIPTION

The present disclosure relates to a control system 100 and associated method for controlling operation of an agricultural harvesting machine, here in the form of a forage harvester 2. A first sensor 24 operably coupled, in use, to the forage harvester 2, specifically here within or adjacent to a crop flow through an unloading spout 22 of the harvester 2, is configured to obtain first sensor data indicative of a crop content measure associated with the crop material in the crop flow. As discussed herein, this may include a measure of the presence of a specific crop component, e.g. starch content, of the crop material. A second sensor 25 operably coupled, in use, again within the unloading spout 22 is configured to obtain second sensor data which is indicative of a crop size measure. In the illustrated embodiment, the second sensor comprises an optical sensor, specifically a camera, within the unloading spout 22 and is operable to obtain image data of crop material passing therethrough. As discussed herein, a crop processing metric is computed in dependence on the first and second sensor data, the processing metric relating to a level of processing applied or to be applied to the crop material by the forage harvester 2 and specifically by the crop processing apparatus thereof, with the intended usage of the crop material in mind - e.g. as animal feed. Operation of one or more operable components of or otherwise associated with the forage harvester 2 can be controlled accordingly, e.g. utilising a user interface (e.g. display terminal 28 of the forage harvester 2) to display a graphical representation of the crop processing metric, suggested adjustments to the crop processing apparatus operational settings or the like, or to at least partly automate adjustments to the forage harvester operation, as discussed in detail herein.

### Harvester

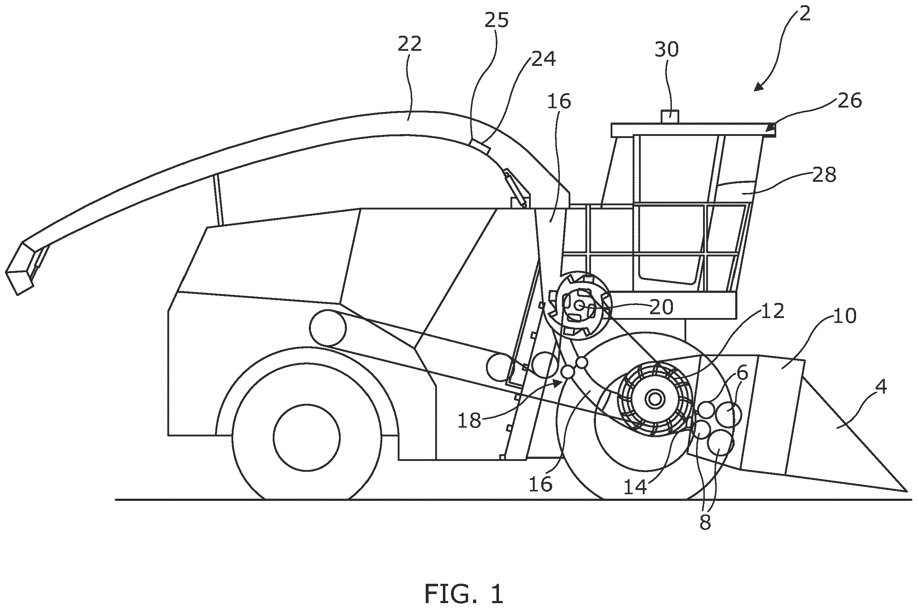

FIG 1 illustrates an agricultural harvesting machine in the form of a forage harvester 2. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The chopper drum 12, shear bar 14, cracker unit 18 and other associated components may herein be referred to collectively as the crop processing apparatus of the forage harvester 2. The harvested crop is then blown upwards along the duct 16 by an accelerator 20 and exits through a spout 22 directing the processed crop into a trailer or other vehicle moving alongside the forage harvester 2, as will be appreciated.

The forage harvester 2 is further provided with an operator's cab 26. A user interface in the form of a display terminal 28 is located within the operator's cab 26 to communicate information to the operator regarding the operation of the forage harvester 2, and specifically under control of the control system 100 in the manner discussed herein for communicating information to the operator regarding the operational state of the control system 100, the crop processing apparatus, etc. In alternative embodiments, the user interface may instead be provided on a portable electronic device carried by the operator, such as a smart phone or tablet computer utilising application software stored or otherwise accessible by the remote user device.

### Operational Use

As discussed herein, the present disclosure utilises sensor data from the first and second sensors 24, 25 for determining a crop processing metric indicative of a level of processing applied or to be applied by the forage harvester 2, and more particularly the crop processing apparatus of the harvester 2.

The first sensor 24 here comprises an infrared sensor operable to monitor a spectroscopic response to measurement signals transmitted by a transmitting element of the sensor 24. The spectroscopic response is indicative of a crop content measure of one or more crop components, including for example a dry matter content, fiber, protein, fat, ash content and/or sugar content. In the present embodiment, the crop content measure comprises a measure of a starch content of the crop material as the crop content measure. The first sensor 24 is coupled, in use, to the forage harvester 2 at or proximal to a crop flow associated with the harvester 2. Here, the sensing region of the first sensor 24 encompasses a crop flow in the discharge spout 22 of the forage harvester 2.

The second sensor 25 comprises an optical sensor, and specifically a camera. Like the first sensor 24, the camera 25 is coupled, in use, to the forage harvester 2 at or proximal to a crop flow associated with the harvester 2. Here, the imaging region of the camera 25 encompasses a crop flow in the discharge spout 22 of the forage harvester 2. In the illustrated embodiment both the infrared sensor 24 and the camera 25 are provided in a single housing within the discharge spout 22 of the harvester 2, as shown in FIG. 1.

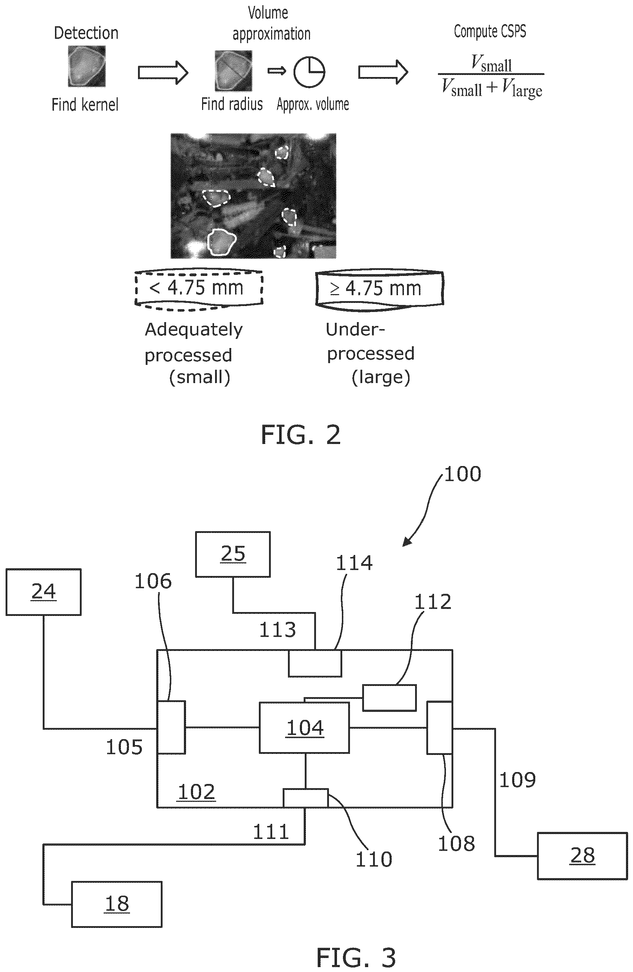

The control system 100 (see below) and specifically the controller 102 thereof is configured to receive and analyse image data from the second sensor 25 to identify crop material components within the image data. This includes performance of an object recognition process on image data received from the second sensor for identifying individual crop material components within the image data and identifying one or more properties thereof. This is illustrated figuratively in FIG. 2, where the one or more properties include a measure of a diameter of the individually identified crop material components.

As discussed herein, the diameter of the identified crop material pieces, and specifically a proportion of crop material pieces having a diameter above or below a threshold parameter is used in the calculation of the crop processing metric. In practice, the controller 102 is configured to compare the determined crop size measures (here the diameter of individual crop material pieces as identified from the image data from the camera 25) with a threshold size parameter. In the illustrated embodiment the threshold size parameter is preset at 4.75mm. This value is set at a level indicative of a size at which the crop material may be digestible by livestock. However, this threshold may be set at another appropriate level or be adjusted by an operator of the harvester 2, for example. The proportion of material below the threshold is used to apply a correction to the crop content measure, as determined from the first sensor data, to compute an adjusted crop processing metric - here an adjusted measure of a starch content of the crop which is found in crop material pieces having a size less than the threshold. This may otherwise be termed the "crop silage processing score (CSPS)".

The crop processing metric is advantageously used herein to control operation of operable components of the forage harvester 2. For instance, where the determined metric is relatively low, a level of processing applied by the forage harvester 2, or specifically operable components thereof, can be increased. Conversely, where the crop processing metric is relatively high, a level of processing applied by the harvester 2, or components thereof, can be decreased. This may be beneficial in obtaining improvements in fuel consumption, improvements or optimalisation of material throughput, or reduction in wear and tear of components whilst still achieving a desired level of processing of the crop material.

In the illustrated embodiment, the one or more operable components include one or more components of or otherwise associated with a crop processing apparatus (or "processor") of the harvester 2. Specifically here this relates to the cracker unit 18 and one or more rollers thereof. The controller 102 is configured here to control one or more operational parameters of the cracker unit 18 to adjust a level of processing applied thereby to crop material passing therethrough. This includes adjustment of a roller gap and/or roller speed associated with the roller(s) in dependence on the determined crop processing metric. This advantageously increases or decreases a level of processing applied to gathered crop by the forage harvester 2 by adjusting a level of mechanical force applied by the roller(s) as the crop material passes through the cracker unit 18.

Further, the one or more operable components also include a user interface, specifically here a display terminal 28 provided within the forage harvester 2. The display terminal 28 is used here to display a graphical representation thereon indicative of the computed crop processing metric. In an extension of this, for instance in an at least partly automated system, the graphical representation may be provided for information purposes to inform an operator of the harvester 2 of automated adjustments made, for example, to crop processing apparatus (e.g. the cracker unit 18) of the harvester 2 as discussed above. The display terminal 28 may provide one or more instructions or suggested adjustments to operational setting(s) associated with the harvester 2 and/or components thereof.

Further operable components and suitable adjustments thereof are also within the scope of the present disclosure, as will be appreciated, and as is discussed herein.

### Control System

FIG 3 illustrates an embodiment of a control system 100 of the present disclosure. As discussed herein, the control system 100 comprises a controller 102 operably connected to the first and second sensors 24, 25. The control system 100 is configured for controlling one or more operable components 28, 18 associated with the harvester 2 in the manner discussed herein. In the illustrated embodiment, the controllable operable components include the cracker unit 18 of the harvester 2 for controlling level of processing applied to the crop, as is discussed herein, and a user interface 28 associated with the harvester 2, which as discussed is provided as a display terminal 28 in the operator cab 26 of the harvester 2 to provide a graphical representation illustrative of the operation of the control system 100, again as discussed herein.

Control system 100 comprises a controller 102 having an electronic processor 104, electronic inputs 106, 114 and electronic outputs 108, 110. The processor 104 is operable to access a memory 112 of the controller 102 and execute instructions stored therein to perform the steps and functionality of the present disclosure discussed herein, e.g. by controlling the display terminal 28 to provide the graphical representation, and/or controlling operation of operable components, e.g. cracker unit 18.

The processor 104 is operable to receive data from the first sensor 24 via input 106 which, in the illustrated embodiment, takes the form of input signals 105. The data is indicative of sensor data from the infrared sensor indicative of a crop content measure associated with crop material processed by the harvester 2. The processor 104 is also operable to receive image data from the second senor (camera 25), here in the form of input signals 113 from the camera 25.

The processor 104 is configured to analyse the data from the first and second sensors 24, 25 and determine therefrom any necessary adjustment in the operational state of one or more operable components of or otherwise associated with the harvester 2, e.g. the cracker unit (or components thereof) for adjusting a level of processing applied thereby. This is based on a crop processing metric determined in the manner discussed hereinabove.

Controller 102 includes an electronic output 110 configured to output control signals 111 generated by the processor 104 for controlling operation of the cracker unit 18. Specifically, processor 104 is operable to generate, and the controller 102 operable to then output via output 1110, control signals 111 to the cracker unit 18 or a local control unit thereof for controlling operable components thereof, specifically here a roller setting of the cracker unit 18, which can include a displacement setting for one or more rollers thereof, or an operational speed of the rollers, for instance.

Output 108 is operably coupled to the display terminal 28. Control system 100 is operable to control operation of the display terminal 28 e.g. through output of control signals 109 in order to display data to an operator of the harvester 2 relating to the operation of the control system 100. Specifically, the control system 100 is operable to control the display terminal 28 to display to the operator a representation of crop processing metric to an operator of the harvester 2. This may be used, for example, by an operator of the harvester 2 to make additional manual adjustments to the harvester settings.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A control system for controlling operation of an agricultural harvesting machine, the control system comprising one or more controllers, and being configured to:
receive first sensor data from a first sensor operably coupled, in use, to the harvesting machine, the first sensor data being indicative of a crop content measure;
receive second sensor data from a second sensor operably coupled, in use, to the harvesting machine, the second sensor data being indicative of a crop size measure;
compute a crop processing metric in dependence on the first and second sensor data; and
generate and output one or more control signals for controlling operation of one or more operable components of or otherwise associated with the agricultural harvesting machine in dependence on the processing metric.

2. A control system of claim 1, wherein the crop processing metric comprises a processing score for the crop material indicative of a level of processing applied to the crop material by the harvesting machine, or by one or more components of a crop processing apparatus of the harvesting machine.

3. A control system of claim 1 or claim 2, wherein the first sensor comprises a spectroscopic sensor; optionally an infrared sensor.

4. A control system of any preceding claim, wherein the crop content measure comprises a measure of one or more properties of the crop material, optionally including one or more of a dry matter content, a fiber content, protein content, fat content, ash content, starch content and/or sugar content.

5. A control system of any preceding claim, wherein the second sensor comprises an optical sensor configured to obtain image data; and wherein the one or more controllers are configured to receive and analyse image data from the second sensor for identifying crop material components within the image data.

6. A control system of claim 5, wherein the one or more controllers are configured to perform an object recognition process on image data received from the second sensor for identifying individual crop material components within the image data, and optionally identifying one or more properties thereof including a measure of one or more dimensions of the identified crop material components.

7. A control system of any preceding claim, wherein the one or more controllers are be configured to compute the crop processing metric through application of an adjustment to a crop content measure as determined from the first sensor data in dependence on a crop size measure as determined from the second sensor data.

8. A control system of claim 7, wherein the one or more controllers are configured to:
determine a crop size distribution for crop material identified within the second sensor data to determine a proportion of identified crop material components having a size measure which is at or smaller than a threshold size parameter; and
apply the determined proportion to the crop content measure, as determined from the first sensor data to compute the crop processing metric.

9. A control system of claim 8, wherein the crop content measure comprises a measure of the total starch content of the crop material, and the one or more controllers are configured to apply an appropriate adjustment based on the determined size proportion to determine a crop processing metric which is indicative of a starch content of crop material having a size measure which is at or below the predetermined threshold size parameter.

10. A control system of any preceding claim, wherein the one or more operable components include one or more components of or otherwise associated with a crop processing apparatus of the agricultural harvesting machine; and wherein the one or more controllers are configured to control one or more operational parameters of the crop processing apparatus to adjust a level of processing applied thereby to crop material passing through the crop processing apparatus in dependence on the crop processing metric.

11. A control system of claim 10, wherein the one or more controllers are configured to:
adjust one or more operational parameters of the crop processing apparatus to increase a level of processing applied to the crop material by the crop processing apparatus in dependence on the crop processing metric being at or below a crop processing metric threshold; and/or
adjust one or more operational parameters of the crop processing apparatus to decrease a level of processing applied to the crop material by the crop processing apparatus in dependence on the crop processing metric exceeding a crop processing metric threshold.

12. A control system of any preceding claim, wherein the one or more operable components include:
a processor roller or rollers, and wherein the one or more controllers are configured to adjust a roller gap and/or roller speed associated with the processor roller(s) in dependence on the determined crop processing metric;
a cutting apparatus, and wherein the one or more controllers are configured to adjust one or more operable parameters of the cutting apparatus including an operational speed or position of one or more cutting members of the cutting apparatus;
a guidance system for the harvesting machine, and wherein the one or more controllers are configured to control a forward speed of the agricultural harvesting machine in dependence on the crop processing metric;
a header for the harvesting machine, wherein the one or more controllers are configured to control operation of the header or one or more components thereof in dependence on the crop processing metric;
an accelerator assembly for the agricultural harvesting machine, where the one or more controllers are configured to adjust an operational speed of the accelerator assembly in dependence on the crop processing metric; and/or
a user interface, and wherein the one or more controllers are configured to control operation of the user interface to control display of a graphical representation thereon indicative of the computed crop processing metric.

13. A crop processing system for an agricultural harvesting machine, the crop processing system comprising a control system of any preceding claim; and first and second sensors operably coupled, in use, to the agricultural harvesting machine for obtaining first and second sensor data.

14. An agricultural harvesting machine comprising the control system of any of claims 1 to 12; and/or a system of claim 13.

15. A method of monitoring operation of an agricultural harvesting machine; the method comprising:
receiving first sensor data from a first sensor operably coupled, in use, to the harvesting machine, the first sensor data being indicative of a crop content measure;
receiving second sensor data from a second sensor operably coupled, in use, to the harvesting machine, the second sensor data being indicative of a crop size measure;
computing a crop processing metric in dependence on the first and second sensor data; and
controlling operation of one or more operable components of or otherwise associated with the agricultural harvesting machine in dependence on the processing metric.
